Europäisches Patentamt

European Patent Office

Office européen des brevets

(11) Numéro de publication: **0 008 250**
A1

## DEMANDE DE BREVET EUROPEEN

(21) Numéro de dépôt: 79400475.4

(22) Date de dépôt: 10.07.79

(51) Int. Cl.³: **H 02 K 3/52, H 02 K 1/24**

(30) Priorité: 11.08.78 FR 7823720

(43) Date de publication de la demande: 20.02.80
Bulletin 80/4

(84) Etats contractants désignés: BE DE GB IT SE

(71) Demandeur: **C E M COMPAGNIE ELECTRO
MECANIQUE Société Anonyme, 12, rue Portalis,
F-75008 Paris (FR)**

(72) Inventeur: **Remy-Bize, Bernard, 63 rue Hermite,
F-54000 Nancy (FR)**

(74) Mandataire: **Roger-Petit, Jean-Camille et al, OFFICE
BLETRY 2, Boulevard de Strasbourg, F-75010
Paris (FR)**

(54) Rotor de machine électrique à pôles saillants.

(57) L'invention concerne un rotor de machine électrique
à pôles saillants solidaires de l'arbre de la machine.

Une frette (7) à haute résistance mécanique est disposée autour des pôles et comporte alternativement des
parties (7a) en métal à bonne perméabilité magnétique, qui
sont disposées en regard des pôles (2), et des parties (7b)
en métal amagnétique, qui sont disposées en regard des
espaces interpolaires. L'invention permet de réaliser des
rotors à pôles saillants capables de tourner à grande vitesse
et présentant de faibles pertes par ventilation.

Rotor de machine électrique à pôles saillants.

L'invention concerne un rotor de machine électrique à pôles saillants solidaires de l'arbre de la machine.

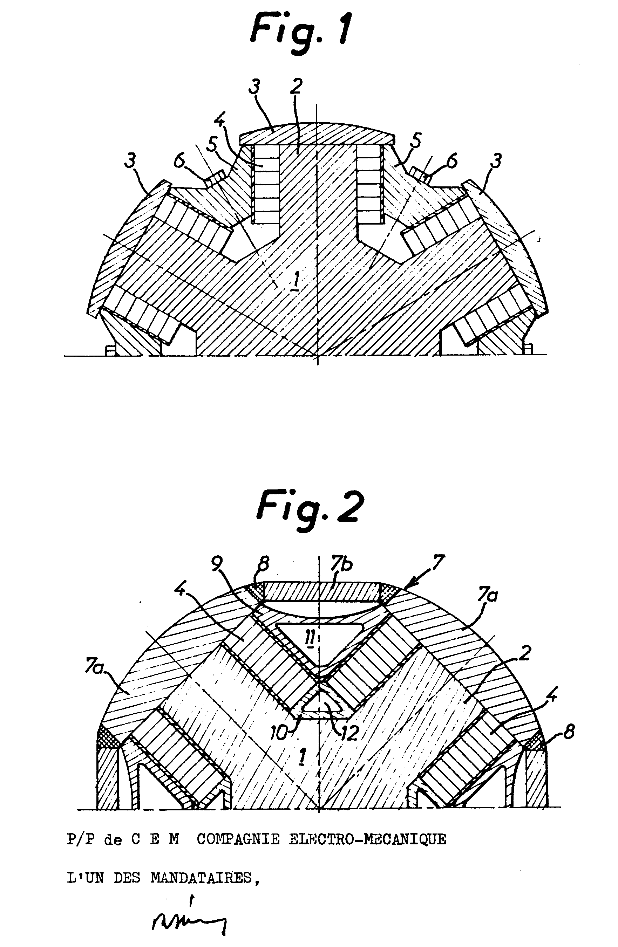

Dans les machines électriques connues avec rotor à pôles saillants, les enroulements inducteurs montés sur les noyaux polaires sont maintenus en place contre la force centrifuge par des épanouissements polaires et, si nécessaire, par des cales interpolaires. La figure 1 des dessins annexés montre, en coupe partielle, une telle machine connue. Comme montré sur la figure 1, l'arbre 1 est muni de pôles saillants 2 terminés par des épanouissements polaires 3. Les bobines inductrices 4 montées autour des pôles 2 sont calées par des moyens appropriés entre les épanouissements polaires 3 et l'arbre 1, et elles sont également calées entre elles par des cales 5 en forme de coin rendues solidaires de l'arbre, par exemple par des boulons 6.

Cependant, ces dispositions ne permettent pas d'atteindre des vitesses périphériques élevées. Pour les vitesses dépassant 1500 tours/minute et surtout 3000 tours/minute, on a recours pour les machines de grande puissance à des rotors lisses en acier massifs et à des enroulements placés dans des encoches.

Le problème se pose actuellement de réaliser, même pour des machines de petite taille à nombre de pôles supérieur à deux, des rotors à pôles saillants à vitesse périphérique élevée. Cela est notamment le cas pour des machines alimentées par des convertisseurs statiques à fréquence variable.

0008250

Dans ces machines se pose le problème de la tenue des bobines inductrices eu égard à la force centrifuge, ainsi que celui des pertes par ventilation. Ce dernier problème se pose également dans des rotors de machines homopolaires à pôles saillants.

Le but de l'invention est de réaliser un rotor de machine électrique à pôles saillants et à vitesse périphérique élevée, permettant de résoudre les problèmes indiqués ci-dessus.

Selon la présente invention, ces problèmes sont résolus par le fait qu'une frette à haute résistance mécanique est disposée autour des pôles saillants et en ce que cette frette comporte alternativement des parties en métal à bonne perméabilité magnétique, qui sont disposées en regard des pôles saillants, et des parties en métal amagnétique, qui sont disposées en regard des espaces interpolaires.

La disposition préconisée ci-dessus permet d'une part d'assurer le calage des bobines et d'autre part de diminuer les pertes par ventilation. Elle permet en outre de canaliser le flux d'air de ventilation créé par le ventilateur de la machine à l'intérieur du rotor, en dirigeant ce flux d'air axialement entre les pôles saillants et la frette.

L'invention sera mieux comprise à l'aide de la figure 2 des dessins annexés, qui représente en coupe, à titre d'exemple, un rotor de moteur synchrone bobiné à quatre pôles selon l'invention.

Sur la figure 2, le rotor comporte un arbre 1 en forme de croisillon de façon à constituer quatre pôles massifs 2 autour desquels est bobiné un enroulement d'excitation 4. Bien que, dans la figure 1, les pôles 2 soient massifs et d'une seule pièce avec l'arbre 1, ils peuvent être aussi, de façon connue, massifs et d'une seule pièce avec une couronne magnétique elle-même solidaire de l'arbre. Au lieu d'être d'une seule pièce avec l'arbre ou la couronne magnétique, les pôles 2 peuvent être aussi rapportés de façon connue sur la périphérie de l'arbre ou de la couronne magnétique. Enfin, au lieu d'être massifs, les pôles 2 et, et, le cas échéant, la couronne magnétique peuvent être aussi constitués de façon connue par un empilage de tôles, de plaques ou de disques forgés en une matière magnétique.

Une frette 7 à haute résistance mécanique est disposée autour des pôles 2 munis des bobines d'excitation 4. La frette 7, réalisée à part, comporte alternativement, dans le sens circonférentiel, des parties magnétiques 7a et des parties amagnétiques 7b. Les parties magnétiques 7a sont de préférence en acier traité à haute résistance mécanique. Les parties amagnétiques 7b sont réalisées de préférence en acier allié à hautes caractéristiques mécaniques, tel que l'acier austénitique au Nickel-Chrome additionné de Titanium. Les parties magnétiques 7a et amagnétiques 7b sont assemblées entre elles de préférence par soudure comme indiqué en 8. La frette 7 ainsi réalisée et éventuellement réusinée sur sa surface périphérique intérieure est mise en place à chaud autour des pôles 2 de telle façon que les parties magnétiques 7a soient situées en regard des pôles 2 et que les parties amagnétiques 7b soient situées en regard des espaces interpolaires. Comme montré sur la figure 2, les parties magnétiques 7a ont de préférence une forme et des dimensions dans le sens circonférentiel, qui sont analogues à celles d'épanouissements polaires classiques de façon à servir aussi d'épanouissements polaires en plus de leur rôle de frette.

On conçoit que la disposition du rotor entouré d'une telle frette 7 permet de réaliser des moteurs à grande vitesse avec de faibles pertes par ventilation, la surface extérieure du rotor étant pratiquement lisse.

Pour le maintien des bobines 4, on peut prévoir des cales 9, en forme de coin, qui prennent appui contre la face interne des parties magnétiques 7a et/ou amagnétiques 7b de la frette 7 par l'intermédiaire de dispositifs de serrage convenables non montrés. Les bobines 4 sont ainsi fermement pressées contre les côtés des pôles 2. Les bobines 4 peuvent être aussi supportées et calées radialement par d'autres cales 10, également en forme de coin, qui prennent appui sur l'arbre 1 entre les pôles 2 comme montré sur la figure 2.

Les cales 9 et 10 peuvent être pourvues de canaux de circulation d'air 11, 12 de façon à assurer une ventilation axiale du rotor à l'aide d'un ventilateur (non montré) calé sur l'ar-

0008250

bre 1 de la machine. Les cales 9 et 10 peuvent être en matière isolante ou en un métal amagnétique, de préférence en alliage léger à base d'aluminium.

Bien que, dans la description qui précède, il soit fait référence à un rotor de moteur synchrone, l'invention peut s'appliquer à des rotors de machines homopolaires à grande vitesse qui, à la différence des machines décrites ci-dessus, comportent des pôles successifs non bobinés et de même polarité dans le sens périphérique. L'intérêt de cette disposition pour des machines homopolaires réside donc uniquement dans la réduction des pertes par ventilation, ces pertes devenant très importantes pour des vitesses élevées.

QUATRE PAGES.-          P/P de CEM COMPAGNIE ELECTRO-MECANIQUE

L'UN DES MANDATAIRES,

REVENDICATIONS DE BREVET

1.- Rotor de machine électrique à pôles saillants solidaires de l'arbre de la machine, dans lequel une frette à haute résistance mécanique est disposée autour des pôles, caractérisé en ce que cette frette 7 comporte alternativement des parties 7a en métal à bonne perméabilité magnétique, qui sont disposées en regard des pôles 2, et des parties 7b en métal amagnétique, qui sont disposées en regard des espaces interpolaires.

2.- Rotor de machine électrique selon la revendication 1, caractérisé en ce que les parties magnétiques 7a ont une forme et des dimensions qui sont analogues à celles d'épanouissements polaires classiques de façon à servir aussi d'épanouissements polaires en plus de leur rôle de frette.

UNE PAGE.-      P/P de C E M  COMPAGNIE ELECTRO-MECANIQUE


L'UN DES MANDATAIRES,

## Fig. 1

## Fig. 2

P/P de C E M  COMPAGNIE ELECTRO-MECANIQUE

L'UN DES MANDATAIRES,

Office européen
des brevets

**RAPPORT DE RECHERCHE EUROPEENNE**

Numéro de la demande

EP 79 40 0475

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | <u>DE - C - 155 539</u> (LAHMEYER) <br> * Page 1, lignes 16-68; page 2, lignes 1-16; figure 2 * | 1,2 | H 02 K 3/52 <br> H 02 K 1/24 |
| | -- | | |
| | <u>BE - A - 359 169</u> (A.C.E.C.) <br> * Page 2, lignes 14-21; page 3, lignes 8-17; page 4, lignes 5-8; figure VI * | 1,2 | |
| | -- | | |
| | <u>DE - B - 1 048 334</u> (FERRANTI) <br> * Colonne 5, lignes 60-69; colonne 7, lignes 36-51; figures 10 et 13 * | 1,2 | **DOMAINES TECHNIQUES RECHERCHES (Int. Cl. 3)** <br><br> H 02 K 3/52 <br> H 02 K 1/24 <br> H 02 K 3/46 <br> H 02 K 3/48 |
| | -- | | |
| | <u>FR - A - 471 993</u> (SOCIETE ALSA-CIENNE DE CONSTRUCTIONS MECANIQUE) <br> * Page 1, lignes 36-56; page 2, lignes 1-63; figures 1 et 2 * | 1,2 | |
| | -- | | |
| A | <u>DE - A - 1 488 665</u> (SIEMENS) <br> * Page 6, lignes 9-26; page 7, lignes 1-8; figures 1 et 2 * | 1 | |
| A | <u>DE - C - 315 71?</u> (SIEMENS-SCHUCKLAND) <br> * Page 1, lignes 38-56; figure 4 * | 1 | **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |
| | ---- | | |
| | | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 12-11-1979 | TIO |

OEB Form 1503.1 06.78